# FASCICULE DE BREVET EUROPEEN

(11) **EP 3 394 463 B1**
(45) Date de publication et mention de la délivrance du brevet: **16.10.2019**
(21) Numéro de dépôt: 16810421.4
(22) Date de dépôt: 19.12.2016
(51) Int. Cl.: F16D 55/225, F16D 65/18

(54) **FREIN A DISQUE ELECTROMECANIQUE COMPRENANT UNE TRANSMISSION COMPENSANT UNE USURE INEGALE D'UNE MEME PLAQUETTE**
ELEKTROMECHANISCHE SCHEIBENBREMSE MIT EINEM GETRIEBE ZUM AUSGLEICH VON UNGLEICHMÄSSIGEM VERSCHLEISS AM BELAG
ELECTROMECHANICAL DISK BRAKE COMPRISING A TRANSMISSION COMPENSATING UNEQUAL WEAR ON THE SAME PAD

(30) Priorité: 21.12.2015 FR 1562941
(43) Date de publication de la demande: 31.10.2018
(73) Titulaire: Foundation Brakes France, 93700 Drancy (FR)
(72) Inventeur: ESNÉE, Didier, 72000 Le Mans (FR)
(74) Mandataire: Brevalex
(86) Numéro de dépôt international: PCT/EP2016/081662
(87) Numéro de publication internationale: WO 2017/108659

(56) Documents cités:
- FR-A1- 2 837 548
- JP-U- H01 168 392
- US-A- 4 852 699

## Description

### DOMAINE TECHNIQUE

L'invention se rapporte à un frein à disque de véhicule automobile à étrier fixe, de type électromécanique, c'est-à-dire équipé d'un moteur électrique entraînant des actionneurs mécaniques.

### ÉTAT DE LA TECHNIQUE ANTÉRIEURE

Plus particulièrement, l'invention se rapporte à un frein à disque comportant un disque de freinage chevauché par un étrier portant au moins une plaquette de friction, au moins deux actionneurs mécaniques incluant chacun un piston mobile et un organe d'entraînement lié au piston par une liaison hélicoïdale pour déplacer une même plaquette afin de la presser contre le disque, un moteur électrique et un mécanisme de transmission aux organes d'entraînement pour mettre en mouvement les organes d'entraînement des deux actionneurs mécaniques.

Le document D1 décrit un étrier de frein avec un actionneur mécanique.

Dans un frein à disque de type hydraulique, tout comme dans un frein électromécanique, plusieurs actionneurs peuvent être prévus pour presser conjointement une même plaquette contre le disque lorsque le frein est activé.

Au cours du temps, cette plaquette qui est pressée par plusieurs actionneurs hydrauliques, s'use d'une manière inégale, de sorte que son épaisseur n'est pas constante le long de cette plaquette au fur et à mesure qu'elle s'use.

Dans le cas d'un étrier hydraulique, l'épaisseur inégale de la plaquette est compensée par le fait que les actionneurs qui la poussent sont reliés à un même circuit hydraulique. Avec un tel circuit le fonctionnement correspond à celui d'un asservissement en efforts, qui permet par là même que les actionneurs aient des courses de longueurs différentes.

Concrètement, lors du freinage, la mise sous pression du circuit hydraulique, et par là même des actionneurs hydrauliques, déplace les pistons de ces actionneurs vers le disque selon des courses pouvant être différentes. Ce déplacement s'opère jusqu'à ce que les pistons plaquent la totalité de la plaquette contre le disque, la pression restant la même dans le circuit et dans les actionneurs en toutes circonstances.

Il s'ensuit qu'avec un étrier hydraulique, le rattrapage d'une usure inégale de la plaquette se fait de manière naturelle : l'intégralité de la plaquette est pressée contre le disque par ses actionneurs hydrauliques dès lors que le circuit hydraulique est mis sous pression.

Avec un étrier de type électromécanique, c'est un même moteur qui entraîne les différents actionneurs électromécaniques poussant une plaquette, par l'intermédiaire d'un mécanisme de transmission, pour qu'ils rapprochent les pistons du disque afin de presser cette plaquette sur le disque.

Si le mécanisme assure une transmission de type directe, les déplacements des deux pistons sont nécessairement les mêmes lorsque le moteur entraine les actionneurs. L'inégalité de l'épaisseur d'une plaquette ne peut pas être rattrapée, car les pistons entraînés par le moteur se déplacent nécessairement de la même course lorsque le moteur est alimenté.

Le but de l'invention est de proposer une architecture assurant un rattrapage de l'usure inégale d'une plaquette, dans un frein ayant un étrier comprenant deux actionneurs mécaniques entraînés par un même moteur électrique pour presser une même plaquette.

### EXPOSÉ DE L'INVENTION

A cet effet, l'invention se rapporte à un frein de véhicule automobile, destiné à chevaucher un bord externe d'un disque de freinage, cet étrier comprenant au moins une plaquette de friction destinée à être pressée contre une face du disque ainsi que :
- deux actionneurs mécaniques distincts incluant chacun un pignon d'entraînement et un piston mobile en appui sur la plaquette pour la presser contre le disque par mise en rotation des pignons d'entraînement ;
- un arbre rotatif pour entraîner les deux actionneurs, cet arbre comportant deux vis sans fin ayant des sens d'enroulement opposés, cet arbre étant mobile en translation selon sa propre direction longitudinale ;
- un moteur électrique d'entraînement de l'arbre rotatif ;
et dans lequel l'arbre rotatif s'étend entre les deux pignons avec ses deux vis sans fin engrenées chacune dans un pignon.

Avec cet agencement, lorsqu'une première partie de la plaquette arrive au contact du disque le pignon de l'actionneur correspondant s'immobilise, mais l'arbre rotatif continue de tourner en se translatant pour déplacer l'actionneur de l'autre partie de la plaquette jusqu'à ce que cette autre partie arrive au contact du disque. Le mécanisme rattrape ainsi une usure inégale de la plaquette en assurant que cette plaquette soit entièrement pressée contre le disque lorsque l'arbre rotatif est mis en mouvement.

L'invention se rapporte également à un étrier ainsi défini, dans lequel le pignon de chaque actionneur est lié au piston correspondant par une liaison hélicoïdale.

L'invention se rapporte également à un étrier ainsi défini, incluant au moins deux plaquettes situées de part et d'autre du disque, et comportant deux premiers actionneurs pour presser une première plaquette contre le disque, ainsi que deux seconds actionneurs pour presser une seconde plaquette contre le disque, avec un premier arbre rotatif entraînant les deux premiers actionneurs et un second arbre rotatif entraînant les deux seconds actionneurs, ainsi qu'un arbre principal d'entraînement du premier arbre et du second arbre, l'arbre principal comportant une première vis sans fin et une seconde vis sans fin enroulées en sens inverses, la première vis sans fin étant engrenée dans un premier pignon de tête du premier arbre, la seconde vis sans fin étant engrenée dans un second pignon de tête du second arbre rotatif, l'arbre principal étant entraîné en rotation par le moteur électrique.

L'invention se rapporte également à un frein comprenant un étrier ainsi défini, ainsi qu'un disque de freinage.

### BRÈVE DESCRIPTION DES DESSINS

- la figure 1 est une vue en coupe transversale d'un frein selon l'invention montrant une portion de disque et l'étrier lorsque l'une des plaquettes présente une plus grande usure dans sa partie inférieure que dans sa partie supérieure ;
- la figure 2 est une vue en coupe longitudinale de l'étrier selon l'invention au niveau du mécanisme de transmission et deux actionneurs ;
- la figure 3 est une vue d'ensemble en perspective du mécanisme de transmission du frein selon l'invention ;
- la figure 4 est une vue de face montrant deux mécanismes de transmission du frein selon l'invention représentés seuls ;
- la figure 5 est une vue de dessus montrant deux mécanismes de transmission du frein selon l'invention représentés seuls.

### EXPOSÉ DÉTAILLÉ DE MODES DE RÉALISATION PARTICULIERS

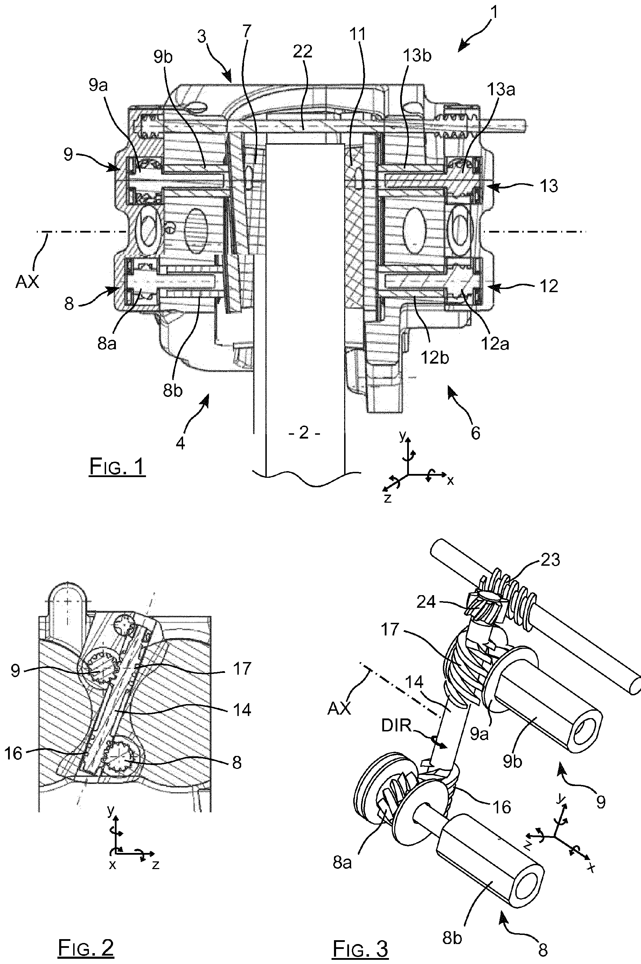

Le frein selon l'invention qui est repéré par 1 dans la figure 1 comporte un disque 2 chevauché par un étrier 3 qui comporte un première portion 4 par laquelle il est porté par un élément de châssis non représenté, et une seconde portion 6, située en vis-à-vis de la première portion 4. L'étrier chevauche le disque 2 de telle manière que ce disque est interposé entre ses portions 4 et 6.

La première portion 4 porte une première plaquette de friction 7 ainsi que deux premiers actionneurs mécaniques 8, 9 pour presser cette plaquette 7 contre une face du disque 2. De manière analogue, la seconde portion 6 porte une seconde plaquette de friction 11, et deux seconds actionneurs mécaniques 12, 13 pour presser cette seconde plaquette contre le disque, lorsque le frein est activé.

Les quatre actionneurs mécaniques 8, 9, 12 et 13 s'étendent parallèlement les uns aux autres, selon un axe AX qui est lui-même parallèle à l'axe de la roue que ce frein équipe. Les plaquettes et le disque sont d'orientation normale à cet axe AX.

Dans la suite, le terme inférieur désigne un élément qui est proche de l'axe de rotation de la roue équipée du frein, et le terme supérieur désigne un élément qui est éloigné de l'axe de rotation de la roue. Les actionneurs 8 et 12 sont ainsi les actionneurs inférieurs du frein et les actionneurs 9 et 13 sont les actionneurs supérieurs du frein. Ceci correspond à une configuration dans laquelle l'étrier est situé en partie haute du disque, comme illustré sur les figures. Mais comme on l'aura compris, le même étrier peut aussi bien être monté en partie basse du disque, ou bien en partie avant ou arrière du disque.

L'actionneur 8 qui est le plus proche de l'axe de rotation de la roue est ainsi le premier actionneur inférieur alors que l'actionneur 9 qui est plus éloigné de cet axe est le premier actionneur supérieur. L'actionneur inférieur 8 appuie ainsi sur une portion de la première plaquette 7 qui est proche du bord inférieur de cette plaquette, alors que l'actionneur 9 appuie sur une portion de la première plaquette 7 qui est proche de son bord supérieur.

De la même manière, le second actionneur inférieur 12 qui est le plus proche de l'axe de rotation appuie une portion de plaquette proche de son bord inférieur et le second actionneur supérieur 13 est plus éloigné de l'axe pour appuyer sur une portion de la plaquette 11 qui est proche de son bord supérieur.

L'actionneur 8 comporte un organe d'entraînement sous forme d'un pignon 8a porté par un axe fileté autour duquel est vissé un piston 8b, le piston 8b et l'axe étant ainsi reliés par une liaison hélicoïdale. Le piston 8b est mobile en translation dans un logement correspondant de l'étrier en étant bloqué en rotation autour de l'axe AX.

Lorsque le pignon 8a est entraîné en rotation autour de l'axe AX, il provoque le déplacement du piston 8b dans un sens ou dans l'autre parallèlement à l'axe AX, selon le sens de rotation du pignon 8a.

De la même manière, les actionneurs 9 12, 13 comportent chacun un pignon, repérés respectivement par 9a, 12a, 13a pour déplacer un piston correspondant, ces pistons étant repérés respectivement par 9b, 12b, 13b.

Comme visible sur la figure 1, la plaquette 7 est plus fortement usée du côté de son bord inférieur que du côté de son bord supérieur. Elle présente ainsi une forme pentue lorsque vue en coupe transversale comme sur la figure 1, son épaisseur augmentant depuis son bord inférieur jusqu'à son bord supérieur.

Les pignons 8a et 9a des actionneurs 8 et 9 tournent autour d'axes parallèles à l'axe AX, et ils sont entraînés en rotation par un même arbre ou axe 14 qui comporte une vis sans fin inférieure 16 engrenée avec le pignon 8a de l'actionneur inférieur 8, et une vis sans fin supérieure 17 engrenée avec le pignon 9a de l'actionneur supérieur 9.

Comme visible sur la figure 2, l'arbre 14 est orienté selon une direction normale à celle de l'axe AX. Il est engrené avec les pignons 8 et 9 en passant entre ces pignons, et la vis sans fin inférieure 16 est enroulée dans le sens normal alors que la vis sans fin supérieure 17 est enroulée dans le sens inverse.

Dans ces conditions, lorsque l'arbre 14 tourne en sens direct repéré par DIR, il provoque une rotation dans le sens indirect du pignon 8a ce qui provoque la sortie du piston 8b. Cette rotation dans le sens direct de l'arbre 14 provoque aussi une rotation en sens indirect du pignon 9a.

En effet, la vis sans fin supérieure 17 est enroulée en sens inverse de la vis sans fin inférieure 16, mais ces deux vis sans fin engrènent les pignons 8a et 9a par leurs côtés opposés, car l'axe 14 passe entre ces pignons 8a et 9a au lieu d'être d'un même côté de ces pignons, comme visible clairement sur la figure 2. Ainsi, lorsque ces vis sans fin 16 et 17 tournent dans le même sens, elles entraînent finalement les pignons 8a et 9a dans le même sens.

Par conséquent, d'une manière générale, une rotation de l'arbre 14 dans le sens direct DIR provoque une sortie des pistons 8b et 9b, alors qu'une rotation de cet arbre 14 dans le sens indirect provoque la rentrée de ces pistons 8b et 9b.

Conformément à l'invention, l'arbre 14 est mobile en translation dans son logement, selon sa direction principale, de manière à compenser une usure inégale de plaquette de frein.

En pratique, lorsque le frein est commandé pour presser les plaquettes sur le disque, l'arbre 14 est mis en rotation dans le sens direct DIR, ce qui provoque la sortie des pistons 8a et 9a. La plaquette 7 arrive alors en appui sur le disque 2 dans une région proche de son bord supérieur, ce qui immobilise le piston 9b, ainsi que son pignon d'entraînement 9a.

L'arbre 14 continue alors de tourner, mais le pignon 9a étant immobilisé, cette rotation de l'arbre 14 provoque son déplacement en translation selon son axe longitudinal, vers le bas sur la figure 3. Dans ces conditions, le pignon 8a qui n'est pas immobilisé continue de tourner sous l'effet de la rotation de la vis sans fin inférieure 16 portée par l'arbre 14, ce qui permet de continuer la sortie du piston 8b jusqu'à ce que la portion inférieure de la plaquette 7 arrive en appui sur le disque 2.

A ce stade, le pignon inférieur 12a est lui aussi immobilisé, de sorte que l'arbre 14 ne peut quasiment plus tourner au-delà de sa position courante, la plaquette 7 étant alors entièrement appliquée et pressée contre le disque 2 bien qu'elle présente une forme pentue résultant d'une usure inégale.

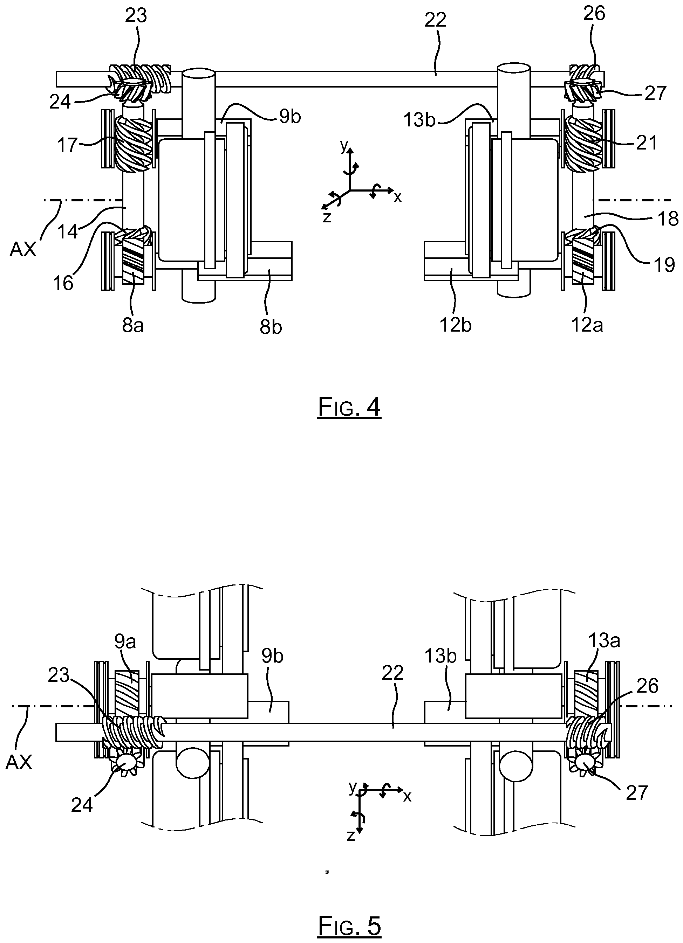

Comme on l'aura compris, les seconds actionneurs 12 et 13 qui sont situés dans la seconde portion 6 de l'étrier, sont eux aussi entraînés en mouvement par un axe ou arbre 18 portant une vis sans fin inférieure 19 et une vis sans fin supérieure 21. Ces vis sans fin 19 et 21 sont engrenées dans les pignons 12a et 13a selon une disposition générale tout à fait analogue à celle de l'ensemble formé par les deux premiers actionneurs 8 et 9, comme visible sur les figures 4 et 5.

Néanmoins, pour que l'ensemble des pistons des actionneurs pressent les plaquettes contre le disque, il est nécessaire que les arbres 14 et 18 tournent en sens inverse, sans quoi les premiers pistons sortiraient alors que les seconds pistons rentreraient, ou inversement.

Comme visible notamment sur les figures 4 et 5, le premier arbre 14 et le second arbre 18 sont mis en rotation par un même arbre principal 22 orienté parallèlement à l'axe AX. Cet arbre principal 22 porte une première vis sans fin 23 engrenée dans un premier pignon de tête 24 porté par le premier arbre 14, et une deuxième vis sans fin 26 engrenée dans un second pignon de tête 27 qui est porté par le second arbre 18.

Avantageusement, l'ensemble moto-réducteur ou le dispositif vis/écrou est irréversible de manière à maintenir les plaquettes 7 et 11 appliquées sur le disque sans alimentation électrique du moteur ou, au contraire, à les maintenir dans la position écartée du disque, condition de non freinage.

Dans une première variante de réalisation, le système d'entraînement électrique des plaquettes 7 et 11 assurent sur commande les freinages de service, de secours et de parking.

Dans une seconde variante avantageuse, le frein selon la présente invention comporte en outre un dispositif de freinage de service hydraulique de type connu couramment appelé « frein fixe », le dispositif électrique d'entraînement des plaquettes 7 et 11 assurant les freinages de secours et de parking.
- 1 :: frein selon l'invention
- 2 :: disque
- 3 :: étrier
- 4 :: première portion
- 6 :: seconde portion
- 7 :: première plaquette de frein
- 8 :: premier actionneur inférieur
- 9 :: premier actionneur supérieur
- 11 :: seconde plaquette
- 12 :: second actionneur inférieur
- 13 :: second actionneur supérieur
- 14 :: arbre
- 16 :: première vis sans fin inférieure
- 17 :: première vis sans fin supérieure
- 18 :: arbre
- 19 :: seconde vis sans fin inférieure
- 21 :: seconde vis sans fin supérieure
- 8a :: premier pignon inférieur
- 8b :: premier piston inférieur
- 9a :: premier pignon supérieur
- 9b :: premier piston supérieur
- 12a :: deuxième pignon inférieur
- 12b :: deuxième piston inférieur
- 13a :: deuxième pignon inférieur
- 13b :: deuxième piston supérieur
- 14 :: premier arbre ;
- 16 :: première vis sans fin inférieure ;
- 17 :: première vis sans fin supérieure ;
- 18 :: deuxième arbre ;
- 19 :: deuxième vis sans fin inférieure ;
- 21 :: deuxième vis sans fin supérieure ;
- 22 :: arbre principal ;
- 23 :: première vis sans fin ;
- 24 :: premier pignon de tête ;
- 26 :: deuxième vis sans fin ;
- 27 :: second pignon de tête ;
- AX :: axe ;
- DIR :: sens direct.

## Revendications

1. Etrier (3) de frein de véhicule automobile, destiné à chevaucher un bord externe d'un disque de freinage (2), cet étrier comprenant au moins une plaquette de friction (7, 11) destinée à être pressée contre une face du disque (2) ainsi que :
- deux actionneurs mécaniques distincts (8, 9, 12, 13) (3) incluant chacun un pignon d'entraînement (8a, 9a, 12a, 13a) et un piston (8b, 9b, 12b, 13b) mobile en appui sur la plaquette (7, 11) pour la presser contre le disque (2) par mise en rotation des pignons d'entraînement (8a, 9a, 12a, 13a) ;
- un arbre rotatif (14, 18) pour entraîner les deux actionneurs (8, 9, 12, 13), cet arbre comportant deux vis sans fin (16, 17, 19, 21) ayant des sens d'enroulement opposés, cet arbre (14, 18) étant mobile en translation selon sa propre direction longitudinale ;
- un moteur électrique d'entraînement de l'arbre rotatif (14, 18) ;
et dans lequel l'arbre rotatif (14, 18) s'étend entre les deux pignons (8a, 9a, 12a, 13a) avec ses deux vis sans fin (16, 17, 19, 21) engrenées chacune dans un pignon (8a, 9a, 12a, 13a).

2. Etrier selon la revendication 1, dans lequel le pignon (8a, 9a, 12a, 13a) de chaque actionneur est lié au piston correspondant (8b, 9b, 12b, 13b) par une liaison hélicoïdale.

3. Etrier selon la revendication 1 ou 2, incluant au moins deux plaquettes (7, 11) situées de part et d'autre du disque, et comportant deux premiers actionneurs (8, 9) pour presser une première plaquette (7) contre le disque (2), ainsi que deux seconds actionneurs (12, 13) pour presser une seconde plaquette (9) contre le disque (2), avec un premier arbre rotatif (14) entraînant les deux premiers actionneurs (8, 9) et un second arbre rotatif (16) entraînant les deux seconds actionneurs (12, 13), ainsi qu'un arbre principal (22) d'entraînement du premier arbre (14) et du second arbre (16), l'arbre principal comportant une première vis sans fin (23) et une seconde vis sans fin (26) enroulées en sens inverses, la première vis sans fin (23) étant engrenée dans un premier pignon de tête (24) du premier arbre (14), la seconde vis sans fin (24) étant engrenée dans un second pignon de tête (27) du second arbre rotatif (16), l'arbre principal (22) étant entraîné en rotation par le moteur électrique.

4. Frein de véhicule automobile, comprenant un étrier selon l'une des revendications précédentes, ainsi qu'un disque de freinage (2).

## Patentansprüche

1. Bremssattel (3) eines Kraftfahrzeugs, der rittlings auf einer Außenkante einer Bremsscheibe (2) anzuordnen ist, wobei der Sattel mindestens einen Reibbelag (7, 11) aufweist, der gegen eine Fläche der Scheibe (2) gedrückt wird, sowie:
zwei verschiedene mechanische Stellglieder (8, 9, 12, 13), von denen jedes ein Antriebsritzel (8a, 9a, 12a, 13a) und einen beweglichen Kolben (8b, 9b, 12b, 13b) beinhaltet, der auf dem Belag (7,11) aufliegt, um diesen durch Rotieren der Antriebsritzel (8a, 9a, 12a, 13a) gegen die Scheibe (2) zu drücken;
eine drehende Welle (14, 18) zum Antreiben der zwei Stellglieder (8, 9, 12, 13), wobei die Welle zwei Schnecken (16, 17, 19, 21) mit entgegengesetzten Windungsrichtungen aufweist, und wobei die Welle (14, 18) in ihrer Längsrichtung verschieblich ist;
einen Elektromotor zum Antreiben der drehenden Welle (14, 18);
und wobei die drehende Welle (14, 18) sich zwischen den zwei Ritzeln (8a, 9a, 12a, 13a) erstreckt, und dabei die zwei Schnecken (16, 17, 19, 21) jeweils mit einem Ritzel (8a, 9a, 12a, 13a) in Verzahnungseingriff sind.

2. Sattel nach Anspruch 1, wobei das Ritzel (8a, 9a, 12a, 13a) eines jeden Stellglieds mit dem entsprechenden Kolben (8b, 9b, 12b, 13b) mittels einer schraublinienförmigen Verbindung verbunden ist.

3. Sattel nach Anspruch 1 oder 2, der mindestens zwei Beläge (7,11) beinhaltet, die sich auf beiden Seiten der Scheibe befinden, und der zwei erste Stellglieder (8, 9), um einen ersten Belag (7) gegen die Scheibe (2) zu drücken, sowie zwei zweite Stellglieder (12, 13) aufweist, um einen zweiten Belag (9) gegen die Scheibe (2) zu drücken, wobei eine erste drehende Welle (14) die zwei ersten Stellglieder (8, 9) antreibt und eine zweite drehende Welle (16) die zwei zweiten Stellglieder (12, 13) antreibt, sowie eine Hauptwelle (22) zum Antreiben der ersten Welle (14) und der zweiten Welle (16), wobei die Hauptwelle eine erste Schnecke (23) und eine zweite Schnecke (26) mit entgegengesetzten Windungsrichtungen aufweist, wobei die erste Schnecke (23) mit einem ersten Kopfritzel (24) der ersten Welle (14) in Verzahnungseingriff ist, die zweite Schnecke (24) mit einem zweiten Kopfritzel (27) der zweiten Welle (16) in Verzahnungseingriff ist, und die Hauptwelle (22) durch den Elektromotor in Rotation versetzt wird.

4. Bremse eines Kraftfahrzeugs, die einen Bremssattel nach einem der vorhergehenden Ansprüche, sowie eine Bremsscheibe (2) aufweist.

## Claims

1. A brake caliper (3) of an automobile vehicle, for overlapping an outer edge of a braking disc (2), this caliper comprising at least one friction pad (7, 11) for being pressed against a face of the disc (2) as well as:
- two distinct mechanical actuators (8, 9, 12, 13) (3) each including a driving pinion gear (8a, 9a, 12a, 13a) and a movable piston (8b, 9b, 12b, 13b) resting on the pad (7, 11) to press it against the disc (2) by rotating the driving pinion gears (8a, 9a, 12a, 13a);
- a rotary shaft (14, 18) for driving both actuators (8, 9, 12, 13), this shaft including two worm gears (16, 17, 19, 21) having opposite winding directions, this shaft (14, 18) being translationally movable along its own longitudinal direction;
- an electric motor for driving the rotary shaft (14, 18);
and wherein the rotary shaft (14, 18) extends between both pinion gears (8a, 9a, 12a, 13a) with its two worm gears (16, 17, 19, 21) each meshed in a pinion gear (8a, 9a, 12a, 13a).

2. The caliper according to claim 1, wherein the pinion gear (8a, 9a, 12a, 13a) of each actuator is connected to the corresponding piston (8b, 9b, 12b, 13b) by a helical connection.

3. The caliper according to claim 1 or 2, including at least two pads (7, 11) located on either side of the disc, and including two first actuators (8, 9) to press a first pad (7) against the disc (2), as well as two second actuators (12, 13) to press a second pad (9) against the disc (2), with a first rotary shaft (14) driving both first actuators (8, 9) and a second rotary shaft (16) driving both second actuators (12, 13), as well as a main shaft (22) for driving the first shaft (14) and the second shaft (16), the main shaft including a first worm gear (23) and a second worm gear (26) wound in reverse directions, the first worm gear (23) being meshed in a first head pinion gear (24) of the first shaft (14), the second worm gear (24) being meshed in a second head pinion gear (27) of the second rotary shaft (16), the main shaft (22) being rotatably driven by the electric motor.

4. A brake of an automobile vehicle, comprising a caliper according to one of preceding claims, as well as a braking disc (2).
